# EUROPEAN PATENT SPECIFICATION

(11) **EP 2 971 467 B1**
(45) Date of publication and mention of the grant of the patent: **01.02.2017**
(21) Application number: 14723196.3
(22) Date of filing: 14.03.2014
(51) Int. Cl.: E21B 33/06, F16K 3/00, E21B 29/08

(54) **GATE VALVE ASSEMBLY COMPRISING A SHEAR GATE**
ABSPERRVENTILANORDNUNG MIT EINEM SCHERSCHIEBER
ENSEMBLE ROBINET-VANNE COMPRENANT UNE VANNE DE CISAILLEMENT

(30) Priority: 15.03.2013 US 201361793698 P
(43) Date of publication of application: 20.01.2016
(73) Proprietor: FMC Technologies, Inc., Houston, TX 77067 (US)
(72) Inventor: SKEELES, Harold, Brian, Kingwood, TX 77345 (US); HOULGRAVE, Bob, Houston, Texas 77070 (US)
(74) Representative: Onsagers AS
(86) International application number: PCT/US2014/029349
(87) International publication number: WO 2014/144792

(56) References cited:
- US-A1- 2006 254 773
- US-A1- 2010 319 906

## Description

The invention concerns a gate valve assembly for shearing an elongated member and controlling a fluid flow through a through bore of the gate valve assembly, as well as a method for shearing an elongated member and controlling a fluid flow through a through bore of the gate valve assembly.

An elongated member as used in the application described herein includes well related tubular formed elongated members such as a tubing, coiled tubing, drill pipes used in work over, drilling, completion, production or intervention operations. The elongated member may also be a wire line or the actual tools to be used when carrying out well related operations.

### BACKGROUND OF THE INVENTION

It is well know within the field to use a safety installment assembly such as for instance a Blow Out Preventer (BOP) or a LRP (lower riser package) in order to avoid a blow out from a well bore when a rapid shut down of the well is necessary, especially in an emergency situation.

Various kinds of safety installment assemblies on subsea wells are known from the prior art. BOP arrangements normally have a combined operation mode where cutting the tubing or the wire employed in the well first takes place with one element, for instance a ram arrangement, and thereafter closing the well to ensure a sealed closure to avoid fluid leakage of well fluid with another element in the BOP stack.

As an alternative to a BOP stack with several separate elements, a cutting gate valve arrangement may be used, wherein cutting devices for the cutting of a tubing or a wire line may be included in the gate valve arrangement for shearing of the tubing/wire line prior to closing and sealing the well bore. Such a gate valve arrangement may be provided in various ways. The gate valve arrangement may include one gate valve or plural gate valves. Further the gate valve may comprise a single gate element or plural gate elements for closing the gate valve.

In accordance with an established and well practiced solution, the cutting tool of the gate valve is formed at a front edge of the movable gate element of the gate valve, thereby the closing of the gate valve follows after the cutting of the tube has taken place. However when employing this solution it is necessary to make sure that the actual cutting is to be carried out properly and to ensure that the cut parts of the tubing are properly separated and removed from the closing area of the gate valve before the closing of the gate valve takes place. If not, there is a risk that the cut parts of the tubular or wire line will be stuck during the closing of the gate element, in which case there is no proper closing of the gate valve and no satisfactory closing of the well.

Examples of prior art solutions include U.S. Patent No. 6,601,650; U.S. Patent No. 8,353,338; and U.S. Patent No. 8,567,490; and U.S. Patent application US 2006/254,773.

U.S. Patent No. 6,601,650 discloses a valve assembly with gate valves each arranged with a cutting edge at a front portion of the gate element. This publication describes the arrangement of providing the area close to the gate valve opening with inclined surfaces for moving the sheared pipe parts away from the gate valve before closing the gate valve.

U.S. Patent No. 8,353,338 shows two gate valves each with a moveable gate element provided with a cutting edge. The two gate valves are arranged at each side of the pipe to be sheared and positioned displaced relative to each other as seen in the axial direction of the pipe.

U.S. Patent No. 8,567,490 describes the provision of a knife edge at the gate element of the gate valve in order to obtain a clean cut when cutting the tube. This publication also describes the arrangement of spring elements to enhance the sealing force when closing the gate valve.

U.S. Patent application US 2006/254,773 discloses a safety shut-in system employed during testing, intervention, or other operations in wells, and more particularly to a coiled tubing cutter for use with a safety shut-in system.

An objective of the invention is to provide a gate valve arrangement which is capable of obtaining an efficient shearing of the elongated member and the subsequently closing and sealing of the well bore.

A further objective is to ensure that the cutting process is properly completed before the closing and sealing of the gate valve arrangement is carried out.

A third objective of the invention is to provide a gate valve arrangement with a compact construction, reliable working principles and a simple operation. It has been desirable to provide a gate valve arrangement which ensures that the cutting operation is concluded before the closing of the gate valve is conducted to avoid the problems as described above.

A fourth objective is to ensure the integrity of the sealing functions of the gate valve.

### SUMMARY OF THE INVENTION

The invention is set forth and characterized in the independent claims, while the dependent claims describe other characteristics of the invention.

The invention comprises a gate valve assembly for shearing an elongated member and controlling a fluid flow through a through bore of the gate valve assembly. The through bore is adapted for fluid communication with a well bore and is configured for receiving an elongated member. The gate valve assembly comprises a gate element movably arranged transverse to the through bore between an open position where a gate bore of gate element communicates with the through bore and a closed position where the through bore of the valve assembly is closed off. The shear gate is arranged in a recess in the gate element and the recess has an opening into the gate bore and an orientation transverse to the gate bore. The shear gate is movably arranged in the recess between a shear gate open position where the through bore/gate bore is open and a shear gate closed position where a cutting portion of the shear gate occupies the gate bore. The gate valve assembly may be arranged with a sealing arrangement providing sufficient sealing for the gate element.

By this arrangement of the gate valve assembly conditions are provided for ensuring that the shearing is conducted before the through bore is closed. And, by arranging the shear gate in the movable gate element a relatively compact gate valve assembly is achieved. By arranging the shear gate inside the gate element it is also ensured that the shearing occurs in a plane separate from the closing of the gate element.

In an embodiment of the invention the gate element may be arranged for displacement into the closed position, provided that the shearing gate is arranged in the closed position.

This arrangement of the gate valve assembly ensures that the shear gate needs to be in a closed position with the cutting portion of the shear gate occupying the gate bore, before the closing of the gate valve assembly. By this arrangement it is possible to provide a reliable arrangement ensuring that the shearing is completed before the movable gate element closes the through bore.

In an embodiment of the invention the cutting portion of the shear gate may be provided with at least one hole allowing fluid communication through the cutting portion. By the provision of one or more holes in the cutting portion, the cutting portion may be inserted into the gate bore without causing the fluid flow in the through bore to close off.

In accordance with the invention the shear gate is arranged in a recess in the gate element and the recess may have an opening into the gate bore. In one embodiment the recess may be arranged to extend transversely to the gate bore so that a first portion of the recess is arranged diametrically opposite a second portion of the recess in the gate bore. In this embodiment, when the shear gate is in an open position, the cutting portion is accommodated in the first portion or the second portion of the recess. In one aspect the cutting portion may be accommodated in the first portion before shearing takes place and a further portion of the shear gate may be accommodated in the second portion of the recess.

In one aspect the shear gate may be provided with a shear gate bore. The cutting portion may be arranged for accommodation in a first portion of the recess and the shear gate bore is arranged for accommodation in a second portion of the recess. The cutting portion and the shear gate bore may be arranged for positioning into the gate bore, depending on the opening and closing of the shear gate. The shear gate bore may be arranged for positioning in corresponding alignment with the gate bore in the shear gate open position, and the cutting portion may be arranged for positioning in the gate bore in the shear gate closing position.

Various actuating means may be provided for controlling the movement of the shear gate and the gate element. In one embodiment, one actuator may be arranged for conducting the movement of the shear gate and the gate element. Alternatively, a shear gate actuator may be provided for moving the shear gate and a gate element actuator may be provided for moving the gate element.

The movement of the shear gate in order to move between the closed and opened shear gate position, and the movements of the gate element between the open and closed positions, may occur in the same direction or in opposite directions.

In one embodiment of the invention, the closing of the gate element and the closing of the shear gate may occur by arranging the gate element and the shear element to occur in the same direction, wherein the closing of the gate element may follow the closing of the shear gate. The shear gate may then have an open position wherein the cutting portion may be in the first portion of the recess, and when moving the shearing gate into the shear gate closing position, the shear gate may move in a direction positioning the cutting portion into the gate bore. The gate element may then be moved into a closing position by moving the gate element in the same direction. In one aspect of the embodiment, the shear gate may follow the movement of the gate element, thereby continuing to move the shear gate in the same direction away from the gate bore and closing the gate bore.

In one aspect the shear gate may be provided with an arrangement for position control to ensure the correct position of the shear gate. The shear gate may then comprise a shear gate control member movably arranged in a control bore provided in the gate element. The shear gate control member may then be provided with a shear gate open position and a shear gate closed position. In the shear gate open position, the shear gate control member may be positioned in a first end stop position in the control bore and in the shear gate closed position, the shear gate control member may be positioned in the other end stop position of the control bore.

For carrying out an ordinary closing of the through bore without a preceding shearing operation, the gate valve arrangement may be provided for moving the gate element and the shear gate at the same time in the same direction, for instance by conducting movement by using a gate element actuator moving the gate element with the shear gate inside. The gate element may then be moved into the closing position, and the gate element may be reopened again by moving both the shear gate and the gate element simultaneously for the opening of the gate element. This may be carried out by moving the gate element into an open position by the movement of the shear gate, such as pushing the shear gate accommodated in the gate element and thus moving the gate element into an open position.

The invention also comprises a method for shearing an elongated member arranged in a through bore of a gate valve assembly and closing the through bore in a sealed manner. The through bore may be adapted for fluid communication with a well bore and configured for receiving an elongated member. The steps for shearing of the elongated member and closing the gate element are performed sequentially; wherein the steps comprise moving the shear gate in a recess in the gate element to thereby position a cutting portion of the shear gate into a shear gate closing position for shearing the elongated member, and thereafter moving the gate element with the shear gate accommodated in the recess and a cutting portion of the shear gate occupying the gate bore into a closing position for the closing of the through bore.

In accordance with an embodiment of the method of the invention, the shearing of the elongated member may be conducted by moving the shear gate in the recess, thereby protruding the cutting portion of the shear gate out from the recess and into the gate bore, and continuing to move the shear gate relative to the gate element until the shearing of the elongated member is completed and the shear gate is in the closed position. The shear gate and the gate element may be moved in the same direction. The shear gate and the gate element may be arranged with actuators providing opposing movements.

These and other characteristics of the invention will be explained in more detail with reference to the attached drawings showing a non-restrictive example.

### BRIEF DESCRIPTION OF THE DRAWINGS

Figures 1a-3a are side section views of an embodiment of the invention showing the shear gate in the various positions for shearing of an elongated member, and figures 1b-3b are top section views of the invention as shown in figures 1a-3a.
Figures 4a-5a are side section views of an embodiment of the invention showing the gate element in the various positions for closing the gate valve assembly, and figures 4b-5b are top section views of the invention as shown in figures 4a-5a.
Figures 6a-10a are side section views of actuator arrangements and steps for operation of a gate valve arrangement in accordance with the invention, and figures 6b-10b are top section views of the same arrangements as shown in figures 6a-10a.
Figures 11a-11g are side section views of an alternative embodiment of the invention showing the shear gate in the various positions for shearing an elongated member and closing of the gate valve assembly.

### DETAILED DESCRIPTION OF THE INVENTION

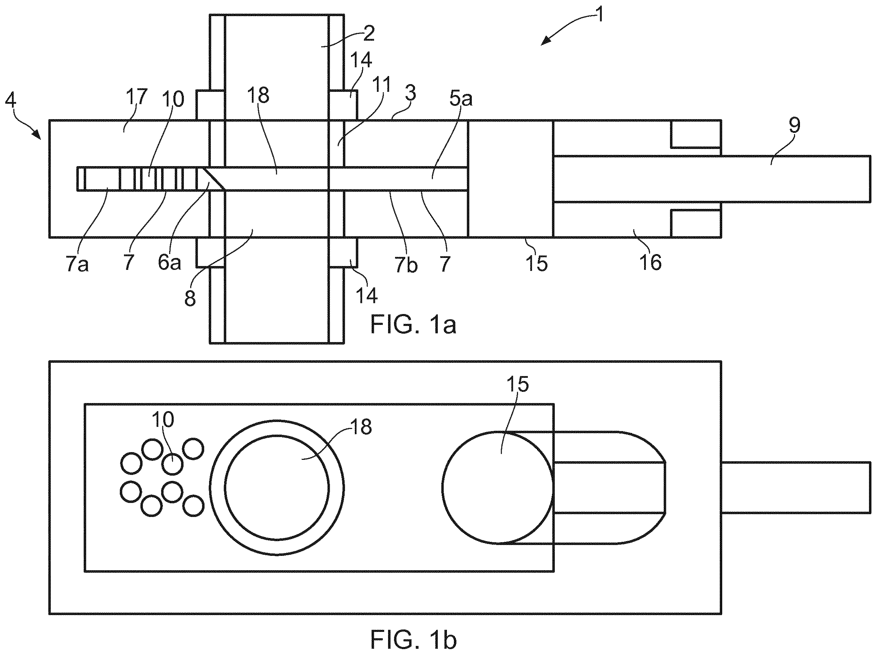

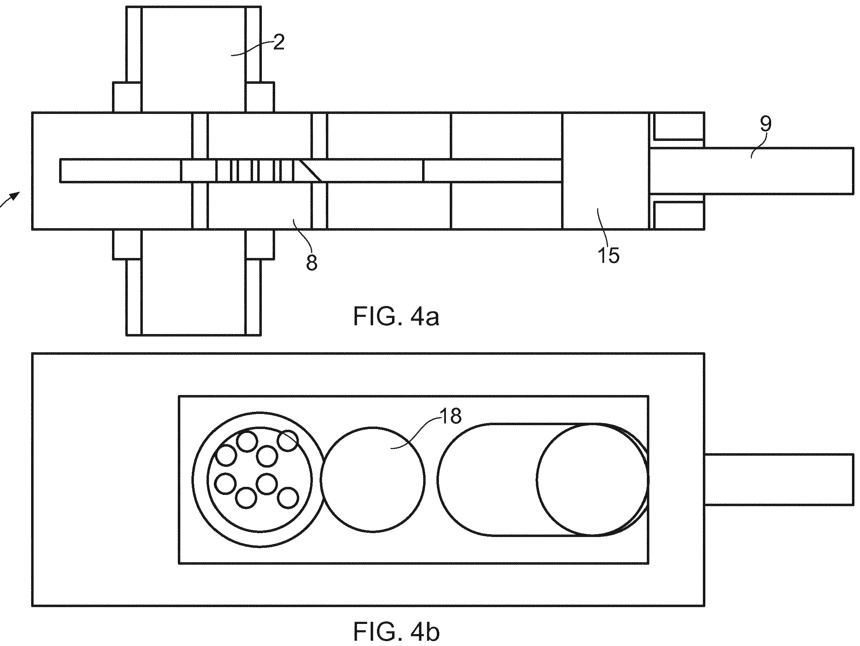

The embodiment of the invention as shown figures 1a-10a and 1b-10b illustrates a gate valve assembly 1 arranged for shearing an elongated member (not shown) and the subsequent closing of a well bore (not shown). The gate valve assembly has a through bore 2 adapted for receiving the elongated member, such as a tubing or a wire line. The through bore 2 is configured for fluid communication with a well bore. A transverse bore 3 is provided in the gate valve assembly 1 with an orientation perpendicular to the through bore 2. A gate element 4 is movably arranged in the transverse bore 3 and a shear gate 5a is movably arranged in the gate element 4. The gate element 4 has a gate bore 8 which depending on the position of the movable gate element is arranged in fluid communication with the through bore 2 or is positioned so that no fluid communication occurs through the gate bore 8. When the movable gate element 4 is positioned so that no fluid communication occurs through the bore 8, the gate valve arrangement is closed, and when the movable gate element 4 is positioned so that the gate bore 8 is in fluid communication with the through bore 2, the gate valve arrangement is fully open or partly open depending on the alignment position of the gate bore 8 with the through bore 2. The gate valve arrangement 1 is fully open when the gate element 4 is positioned so that the gate bore 8 is aligned with the through bore 2 (see figures 1a-3a, 1b-3b) and partly open when the gate bore 8 is displaced out of alignment with the through bore 2 but positioned in fluid communication with the through bore 2 (see figures 4a, 4b).

The shear gate 5a is movably arranged in a recess 7 and has a cutting portion 6a, a shear gate bore 18 which is arranged for accommodation in an first portion 7a of the recess 7 and a shear gate bore 18 which is arranged for accommodation in a second portion 7b of the recess 7. The cutting portion 6a and the shear gate bore 18 are arranged for positioning into the gate bore 8, depending on the opening and closing of the shear gate 5. The shear gate bore 18 is arranged for positioning in corresponding alignment with the gate bore 8 and through bore 2 so that an elongated member may be received through the gate valve assembly. The cutting portion 6a is provided with holes 10 allowing fluid communication through the cutting portion 6a when positioned in the gate bore 8.

The shear gate 5a is further provided with an arrangement for position control comprising a shear gate control member 15 movably arranged in a control bore 16 provided in the gate element 4. The shear gate control member 15 has a shear gate open position and a shear gate closed position. In the shear gate open position, the shear gate control member 15 is positioned in a first end stop position in the control bore 16 and in the shear gate closed position, the shear gate control member 15 is positioned in the other end stop position of the control bore 16.

The movements of the gate element 4 and the shear gate 5a are controlled and conducted by an actuator means illustrated in figure 1a by an actuator arrangement stem 9. The actuator arrangement has provisions for moving the shear gate 5a relative to the gate element 4 and for moving the gate element 4 with the shear gate 5a included relative to the through bore 2. The gate element 4 and the shear gate 5a then move as an unit.

In figures 1a and 1b the shear gate 5a open position is shown with the cutting portion 6a retracted and accommodated in the first portion 7a of the recess 7 and the shear gate bore 18 essentially in alignment with both the gate bore 8 and the through bore 2 for receiving an elongated element. The shear gate control member 15 is then positioned in the end stop position in the control bore 16 corresponding to the shear gate open position.

The gate bore 8 is provided with sleeved arrangements 11 for protecting the gate element seats 14. These sleeve arrangements are 11 made from the same cutting material as the shear gate 5a and provide a minimum gap (close fitting) with the shear gate 5a to enhance the cutting operation and provide a secondary assist when moving the shear gate 5a. The sleeve arrangements 11 are also slightly recessed from the top and bottom sealing surfaces of the gate element 4 to minimize any possibility of residual damage caused by the cutting operation. The movements of the gate element 4 and the shear gate 5a are controlled and conducted by an actuator arrangement stem 9.

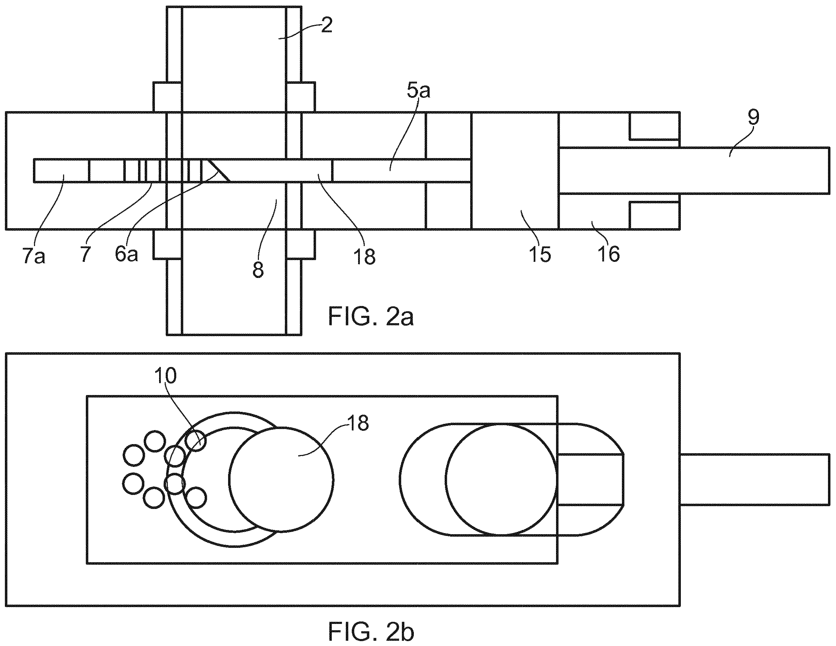

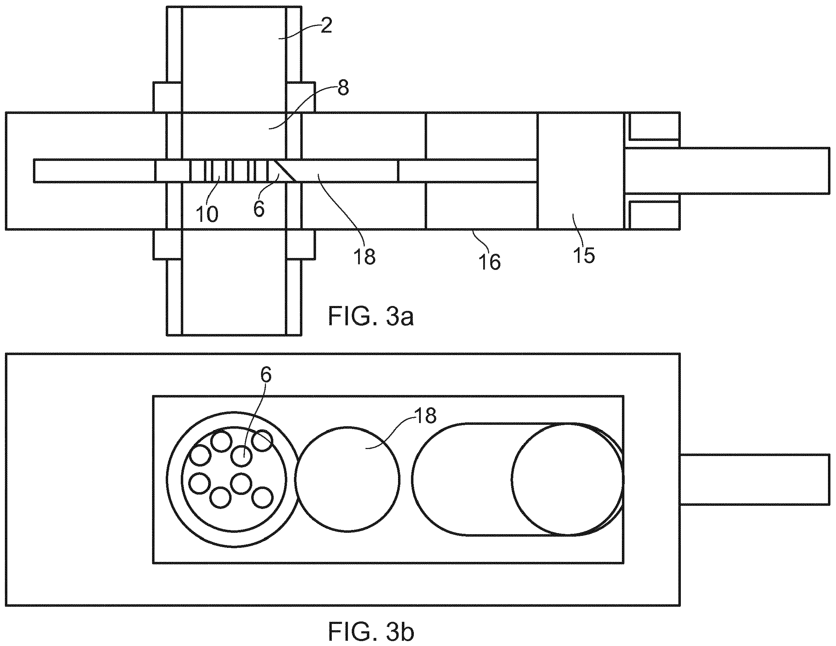

Figures 2a, 2b and 3a, 3b show the steps of displacing the shear gate 5a in the recess 7 by the actuator arrangement stem 9 in order to bring the cutting portion 6a into the gate bore 8 for shearing the elongated element extending through the gate bore 8. Figures 2a, 2b show the position of the cutting portion 6a during the cutting/shearing process, with the shear gate bore 18 partly in the gate bore 8 as it is retracted from the first portion 7a of the recess. The shear gate control member 15 is arranged in a second position in the control bore 16.

Figures 3a, 3b show the position of the cutting portion 6a when the cutting/shearing process is completed and the shear gate control member 15 is then in the other end stop position in the control bore 16 corresponding to the shear gate closed position. The cutting portion 6a is then retracted from the first portion 7a of the recess and occupies the gate bore 8 in a closed position, and the shear gate bore 18 is displaced into the recess 7. In this closed position of the shear gate the holes 10 enable fluid flow through the gate bore 8 and through bore 2 for communication with the well bore.

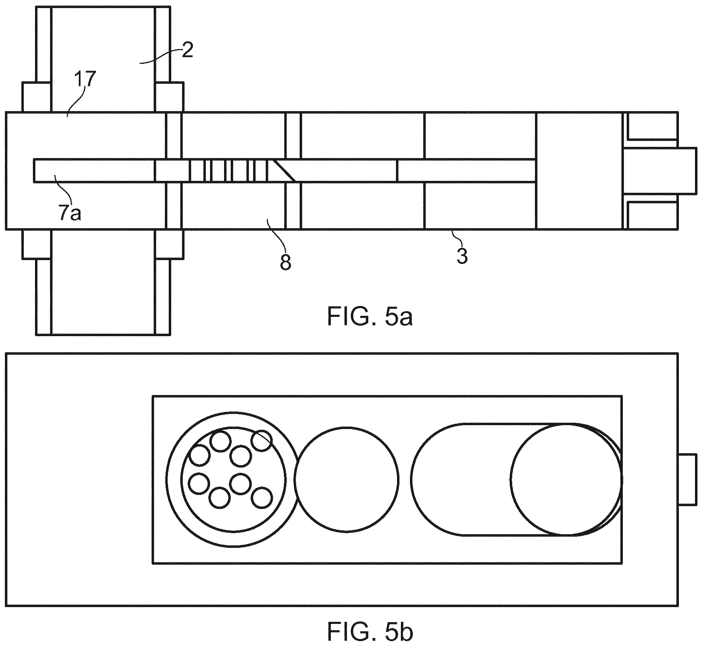

Figures 4a, 4b and 5a, 5b show the steps of closing off fluid communication through the through bore 2 and the gate bore 8 by moving the gate element 4 into a closing position to prevent flow through the gate bore 8 and thereby through the through bore 2.

In figures 4a, 4b, the shearing of the elongated member is completed, and the actuator arrangement stem 9 moves the gate element 4 in the transverse bore 3, thereby moving the gate bore 8 away from alignment with the through bore 2. With the gate element 4 in the position shown in figures 4a, 4b, fluid communication still occurs through the through bore 2.

The continued movement conducted by the actuator arrangement stem 9 moves the gate element 4 further in the transverse bore 3, and the gate bore 8 is moved further away from the through bore 2, thus positioning a closing portion 17 of the gate element in the through bore 2 to thereby prevent fluid communication from occurring through the through bore 2, as seen in figure 5a. The gate element 4 is shown in closed position. The gate valve assembly is then closed and no fluid communication occurs through the through bore 2.

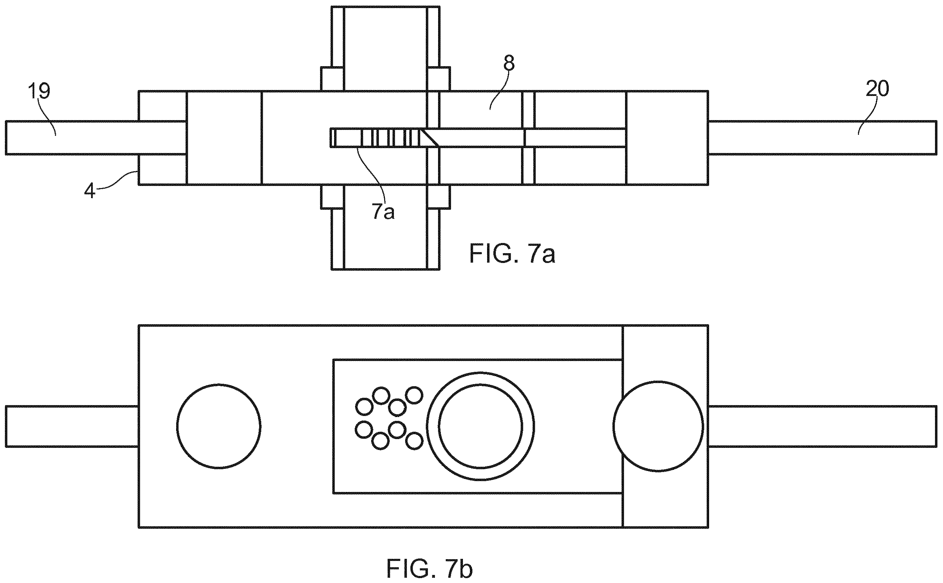

An alternative embodiment of an actuating means of the gate valve assembly is shown in figures 7a-10a, 7b-10b, wherein the actuating means comprises a gate element actuator illustrated as a gate element actuator stem 19 connected to a gate element control member 21 and a shear gate actuator illustrated by a shear gate actuator stem 20 connected to a shear gate control member 15.

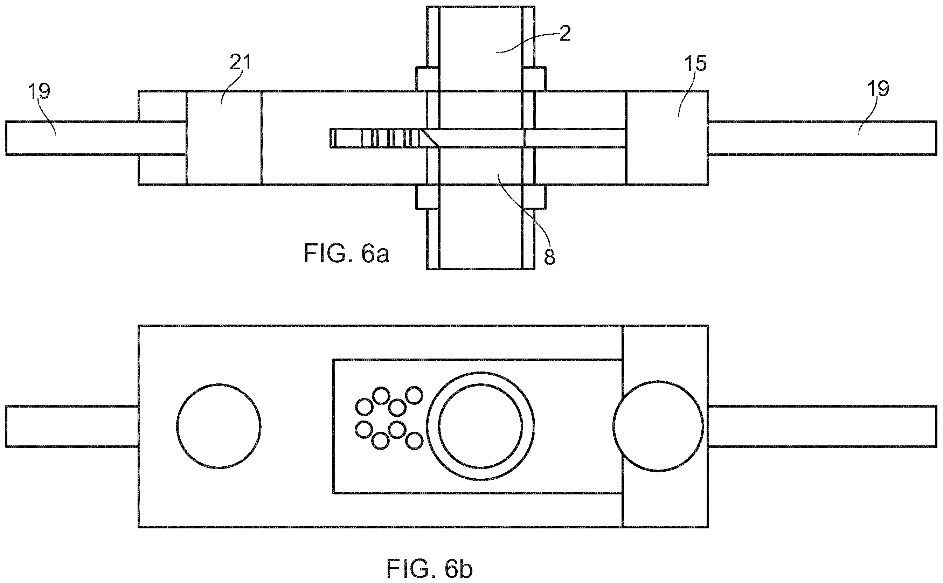

Figures 7a, 7b show the gate element 4 in the closed position during a normal operation of the gate valve assembly where no shearing has taken place prior to the closing of the gate element 4, and the cutting portion 6a is thus included in the first portion 7a of the recess before the closing of the gate element 4. When moving the gate element 4 from an open position, where the gate bore 8 is aligned with the through bore 2 as shown in figures 6a, 6b and into the closed position as shown in fig 7a, 7b, the gate element actuator stem 19 and the shear gate actuator stem 20 cause the movement of the gate element 4 by moving in the same direction, which in this case is a direction from left to right, coinciding with the closing direction of the gate element 4. Both the shear gate 5a and the gate element 4 move in the same direction, and when closing the gate element without first shearing, the shear gate 5a and the gate element 4 move at the same time.

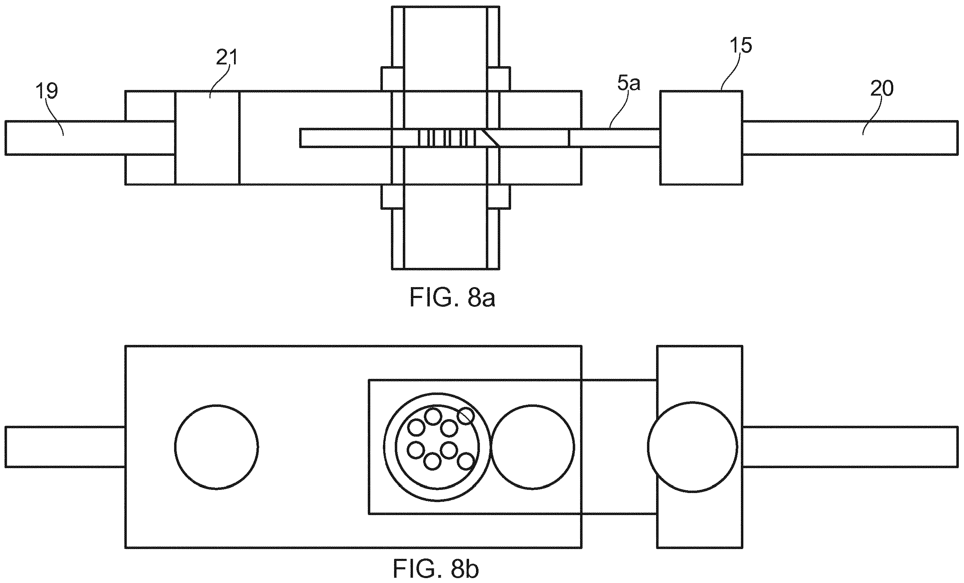

Fig 8a, 8b show the shear gate closed position. The shear gate actuator stem 20 conducts the movement of the shear gate 5a from the shear gate open position and into the shear gate closed position as shown in figures 8a, 8b. In this case the shear gate actuator stem 20 moves in the closing direction of the shear gate 5a, from left to right in figures 8a, 8b, while the gate element actuator stem 19 is held in a fixed position.

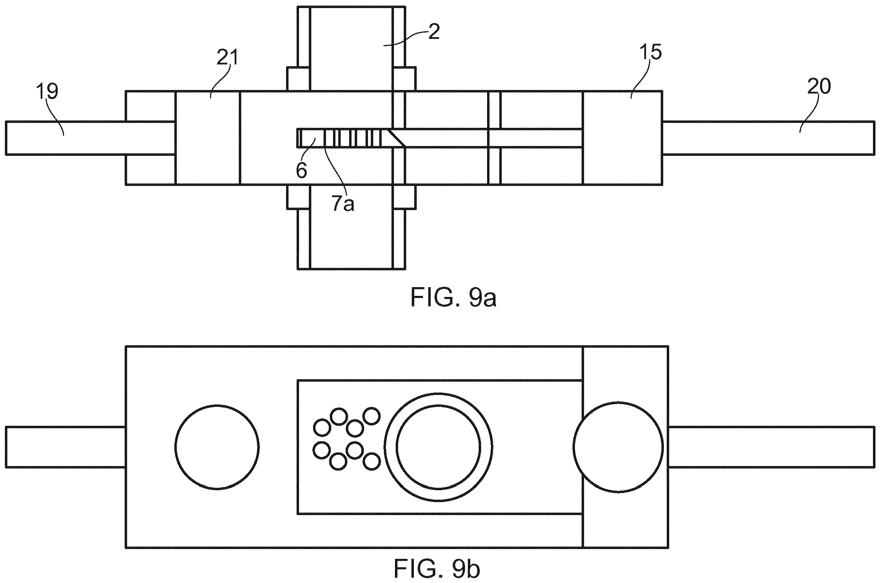

Figures 9a, 9b show the subsequent closing of the gate element 4 after the shearing is completed. The shear gate actuator stem 20 is fixed, while the gate element actuator stem 19 moves the shear gate 5a into the shear gate closed position with the shear gate control member 15 in the end stop position. In this case the gate element actuator stem 19 moves in the closing direction of the gate element 4, from left to right in figures 9a, 9b. By this movement the cutting portion 6a is accommodated in the first portion 7a of the recess, the gate element bore 8 is moved away from the through bore 2 and a closing portion 17 of the gate element is positioned in the through bore 2, as seen in figures 9a, 9b.

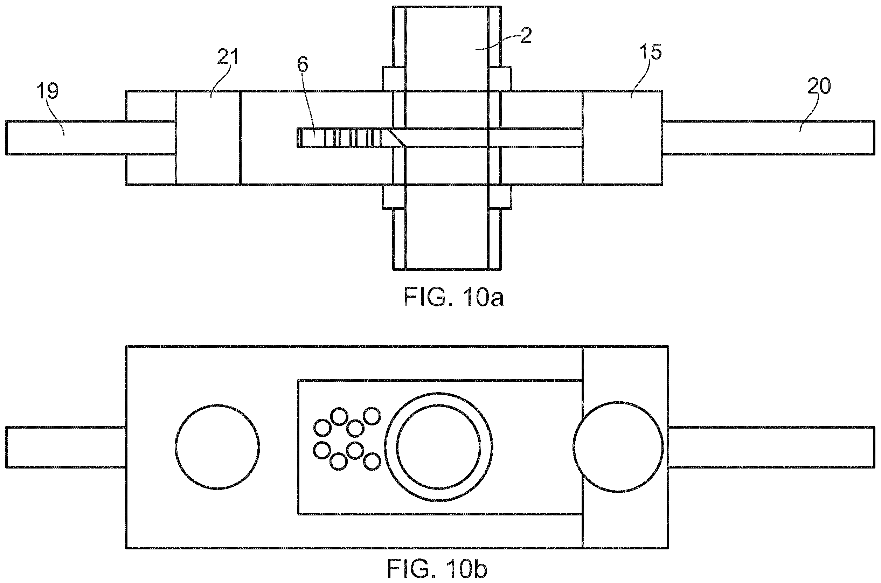

The gate element 4 is moved from the closed position shown in figures 9a, 9b and into the open position shown in figures 10a, 10b by moving the gate element actuator stem 19 and the shear gate actuator stem 20 in the opening direction of the gate element 4, from right to left in figures 10a, 10b.

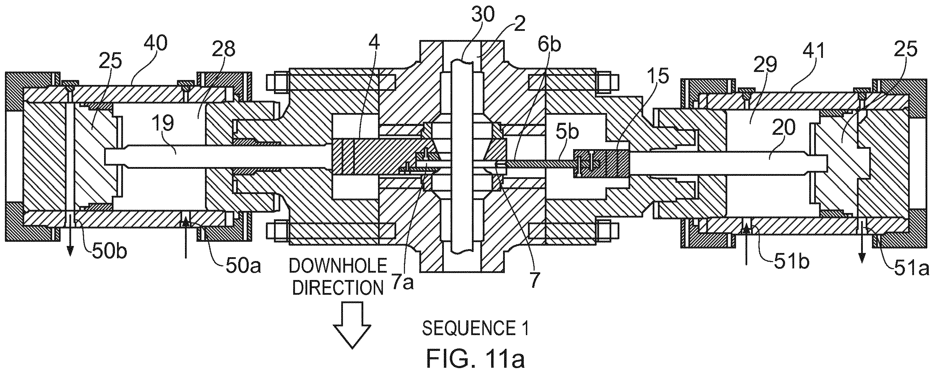

Figures 11a-11g are side section views of an alternative embodiment of the gate vale arrangement 1 illustrated with an elongated member in the through bore 2. The shear gate 5b has a configuration which differs from embodiment of the shear gate 5a shown in figures 1a, 1b-10a, 10b. The shear gate 5b has a cutting portion 6b arranged at a first portion of the shear gate 5b as an alternative to the cutting portion shown for the shear gate 5a in figures 1a,1b-10a,10b. As shown in fig 11a, the shear gate 5b has a shear gate 5b open position wherein the cutting portion 6b is arranged for accommodation in the second portion 7b of the recess before the shearing is to take place.

A gate element actuator 40 is shown with the gate element actuator stem 19 and the actuating piston 25 displaceably arranged in a cylinder bore 28 arranged with fluid passages 50a, 50b as illustrated for fluid to enter and leave the cylinder bore 28 in order to displace the actuating piston 25 or to hold the position of the actuating piston 25.

A shear gate actuator 41 is shown with the shear gate actuator stem 20 and the actuating piston 26 displaceably arranged in a cylinder bore 29 arranged with fluid passages 51 a, 51 b as illustrated for fluid to enter and leave the cylinder bore 29 in order to displace the actuating piston 26 or to hold the position of the actuating piston 25. By this arrangement of the gate valve assembly where the gate element actuator 40 has a gate element actuator stem 19 and the shear gate actuator 41 has an actuator stem 20 moving in opposing directions, the gate valve assembly is pressure balanced with respect to the external (seawater ambient pressure) environment, making the entire gate valve assembly depth insensitive.

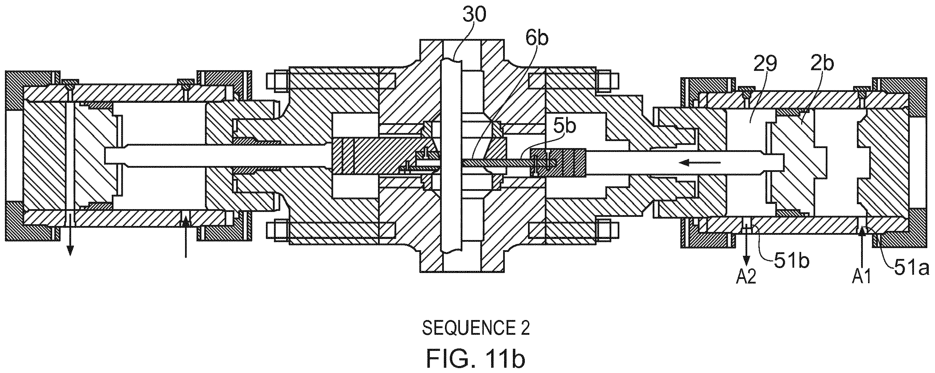

Figure 11b shows the actuation of the shear gate 5b by displacing the actuating piston 26 in the respective cylinder bore 29 due to the entering of medium pressurized fluid through the fluid passage 51a and into the cylinder bore 28 as illustrated by arrow A1 and the subsequent outlet from the fluid passage as illustrated by arrow A2. (The gate element 4 is held in position by regulating the fluid in and out from the fluid passages 50a, 50b.) The cutting portion 6b of the shear gate 5b pushes the elongated member 30 in the through bore 2 from the centered position of figure 11a to the left hand position of figure 11b.

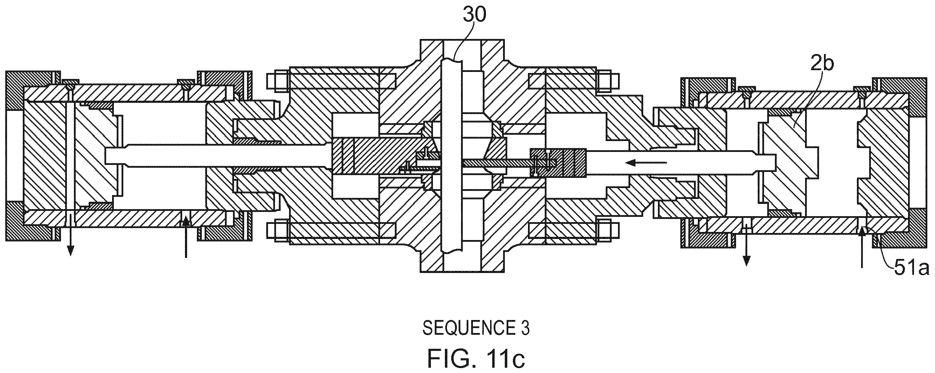

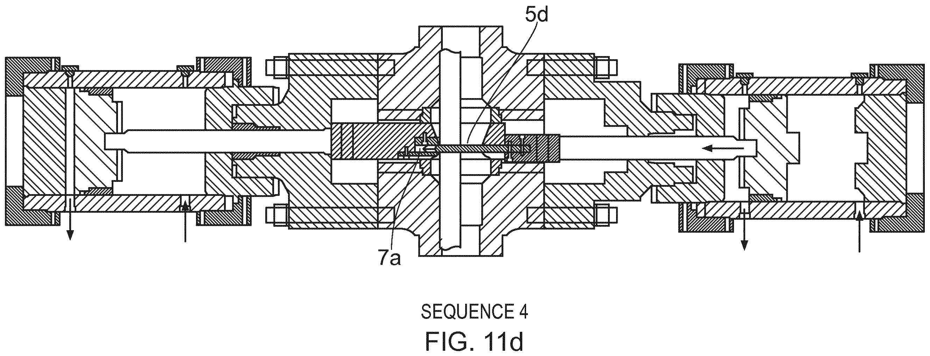

Figure 11c shows the initial phase of the shearing of the elongated member 30, wherein the high pressure fluid enters the fluid passage 51 a and displaces the actuating piston 26, thereby providing the cutting force necessary for the shearing of the elongated member 30, as shown in figure 11d.

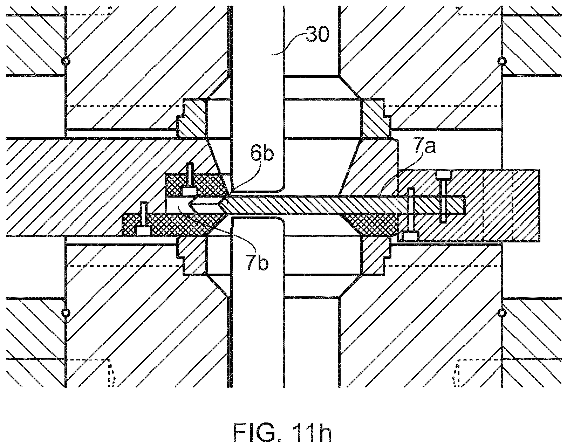

As shown in figure 11d, the shear gate 5b is placed in a shear gate closed position with the cutting portion 6b accommodated in the first portion 7a of the recess and the shearing completed. Figure 11h shows an enlarged detail of figure 11c.

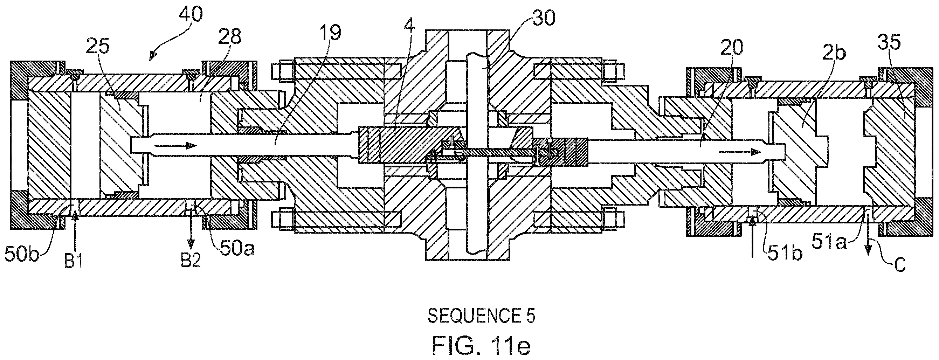

Figure 11e shows the actuation of the gate element 4 by displacing the actuating piston 25 in the respective cylinder bore 28 due to the entering of medium pressurized fluid through the fluid passage 50b and into the cylinder bore 28 as illustrated by arrow B1 and the subsequent outlet from fluid passage 50a as illustrated by arrow B2. The gate element 4 pushes the elongated member 30 in the through bore 2 from the position at one side of the through bore (the left hand position) of figure 11d to a position at the other side of the through bore (the right hand position) as shown in figure 11e. As seen in figure 11e, when displacing the gate element the shear gate actuator stem 20 moves in the same direction as the gate element actuator stem 19, the actuating piston 26 moves toward actuating piston end stop 35 and fluid is let out from the fluid passage 51a, as illustrated by arrow C, and into the fluid passage 51 b.

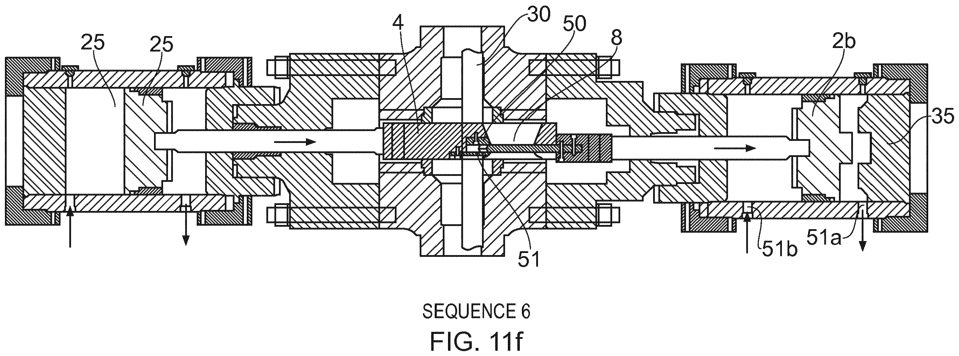

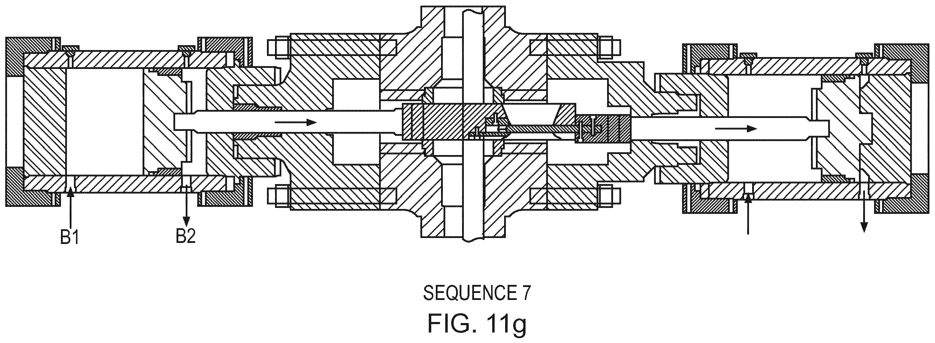

The sheared parts of the elongated member 30 are pushed away from gate element bore 8 when closing the gate element 4 by the continued displacing of the actuating piston 25 in the respective cylinder bore 28. The displacement of the actuating piston is conducted due to the entering of high pressurized fluid through the fluid passage 50b and into the cylinder bore 28, as illustrated by arrow B1, and the subsequent outlet from fluid passage 50a, as illustrated by arrow B2 in figure11g. Chamfered surfaces 50, 51 of the gate element 4 provide the gate element bore 8 with conical shaped outlet openings for easing the sheared parts away from the gate element before closing the gate element 4 as shown in figure 11f. The actuating piston 26 continues to move toward the actuating piston end stop 35, and the outlet of fluid from the fluid passage 51a and the inlet of fluid into the fluid passage 51b continues until the actuating piston 26 arrives at the actuating piston end stop 35.

A person skilled in the art will understand that there may be made alterations and modifications to the embodiments that are within the scope of the invention as defined in the attached claims, and elements or features of the different embodiments may be combined in any configuration.

## Claims

1. A gate valve assembly (1) for shearing an elongated member and controlling a fluid flow through a through bore (2) of the gate valve assembly (1), wherein the through bore (2) is adapted for fluid communication with a well bore and is configured for receiving the elongated member, the gate valve assembly (1) comprising:
a gate element (4) movably arranged transverse to the through bore (2) between an open position in which a gate bore (8) of the gate element (4) communicates with the through bore (2) and a closed position in which the through bore (2) of the valve assembly (1) is closed off; ***characterizing in***
a shear gate (5a) arranged in a recess (7) in the gate element (4), the recess (7) having an opening into the gate bore (8) and being oriented transverse to the through bore (2), and the shear gate (5a) being movably arranged in the recess (7) between a shear gate open position in which the gate bore (8) is open and a shear gate closed position in which a cutting portion (6a) of the shear gate (5a) occupies the gate bore (8).

2. A gate valve assembly (1) in accordance with claim 1, wherein the gate element (4) is arranged for displacement into the closed position provided that the shearing gate is arranged in the closed position.

3. A gate valve assembly (1) in accordance with claim 1 or 2, wherein the cutting portion (6a) of the shear gate (5a) is provided with at least one hole (10) allowing fluid communication through the cutting portion (6a).

4. A gate valve assembly (1) in accordance with one of the preceding claims, wherein the movement of the shear gate (5a) and the gate element (4) is arranged in the same direction.

5. A gate valve assembly (1) in accordance with one of claims 1-3, wherein the movement of the shear gate (5a) and the gate element (4) is arranged in opposite directions.

6. A gate valve assembly (1) in accordance with one of the preceding claims, wherein at least one actuator (19, 21; 20, 15) is arranged for conducting the movement of the shear gate (5a) and the gate element (4).

7. A gate valve assembly (1) in accordance with one of the preceding claims, wherein the recess (7) extends transversely to the through bore (2) so that a first portion (7a) of the recess (7) is arranged diametrically opposite a second portion (7b) of the recess (7) in the gate bore (8), and wherein in an open position of the shear gate (5a) the cutting portion (6a) is accommodated in the first portion (7a) or the second portion (7b) of the recess (7).

8. A method for shearing an elongated member arranged in a through bore (2) of a gate valve assembly (1) and closing the through bore (2) in a sealed manner, wherein the through bore (2) is adapted for fluid communication with a well bore and is configured for receiving an elongated member, wherein the gate valve assembly (1) comprises a gate element (4) movably arranged between an open and a closed position for opening or closing the through bore (2), wherein the elongated member is arranged in the through bore (2) and a gate bore (8) of the gate element (4) in an open position of the gate element (4), and wherein a shear gate (5a) is movably arranged in the gate element (4) between a shear gate open position and a shear gate closed position, the method is ***characterized in that*** it comprises the following steps performed sequentially:
moving the shear gate (5a) in a recess (7) in the gate element (4) to thereby position a cutting portion (6a) of the shear gate (5a) into a shear gate closing position for shearing the elongated member; and thereafter
moving the gate element (4) with the shear gate (5a) accommodated in the recess (7) and the cutting portion (6a) of the shear gate (5a) occupying the gate bore (8) into a closing position for closing of the through bore (2).

9. The method in accordance with claim 8, wherein the shearing is conducted by moving the shear gate (5a) in the recess (7) to thereby protrude the cutting portion (6a) of the shear gate (5a) out from the recess (7) and into the gate bore (8) and then continuing to move the shear gate (5a) relative to the gate element (4) until the shearing of the elongated member is completed and the shear gate (5a) is in closed position.

10. The method in accordance with claim 9, wherein the shear gate (5a) and the gate element (4) are moved in the same direction.

11. The method in accordance with claim 8, wherein the shear gate (5a) and the gate element (4) are moved in the opposite direction.

## Patentansprüche

1. Schieberventilvorrichtung (1) zum Abscheren eines langgestreckten Elements und zum Steuern einer Fluidströmung durch eine Durchgangsbohrung (2) der Schieberventilvorrichtung (1), wobei die Durchgangsbohrung (2) für eine Fluidkommunikation mit einem Bohrloch ausgebildet ist und ferner zum Aufnehmen des langgestreckten Elements ausgebildet ist, wobei die Schieberventilvorrichtung (1) Folgendes aufweist:
- ein Schieberelement (4), das quer zu der Durchgangsbohrung (2) beweglich angeordnet ist, und zwar zwischen einer geöffneten Stellung, in der eine Schieberbohrung (8) des Schieberelements (4) mit der Durchgangsbohrung (2) in Verbindung steht, und einer geschlossenen Stellung, in der die Durchgangsbohrung (2) der Schieberventilvorrichtung (1) geschlossen ist;
**dadurch gekennzeichnet,**
**dass** ein Scherschieber (5a) in einer Aussparung (7) in dem Schieberelement (4) angeordnet ist, wobei die Aussparung (7) eine Öffnung in die Schieberbohrung (8) aufweist und quer zu der Durchgangsbohrung (2) ausgerichtet ist, und wobei der Scherschieber (5a) beweglich in der Aussparung (7) angeordnet ist, und zwar zwischen einer geöffneten Scherschieberstellung, in der die Schieberbohrung (8) geöffnet ist, und einer geschlossenen Scherschieberstellung, in der ein Schneidbereich (6a) des Scherschiebers (5a) die Schieberbohrung (8) einnimmt.

2. Schieberventilvorrichtung (1) nach Anspruch 1,
wobei das Schieberelement (4) zur Verlagerung in die geschlossene Stellung angeordnet ist, vorausgesetzt, dass der Scherschieber (5a) in der geschlossenen Stellung angeordnet ist.

3. Schieberventilvorrichtung (1) nach Anspruch 1 oder 2,
wobei der Schneidbereich (6a) des Scherschiebers (5a) mit mindestens einem Loch (10) versehen ist, das eine Fluidkommunikation durch den Schneidbereich (6a) ermöglicht.

4. Schieberventilvorrichtung (1) nach einem der vorhergehenden Ansprüche, wobei die Bewegungen von dem Scherschieber (5a) und dem Schieberelement (4) in der gleichen Richtung arrangiert sind.

5. Schieberventilvorrichtung (1) nach einem der Ansprüche 1 bis 3,
wobei die Bewegungen von dem Scherschieber (5a) und dem Schieberelement (4) in entgegengesetzten Richtungen arrangiert sind.

6. Schieberventilvorrichtung (1) nach einem der vorhergehenden Ansprüche, wobei mindestens ein Stellglied (19, 21; 20, 15) zum Ausführen der Bewegungen des Scherschiebers (5a) und des Schieberelements (4) angeordnet ist.

7. Schieberventilvorrichtung (1) nach einem der vorhergehenden Ansprüche, wobei sich die Aussparung (7) quer zu der Durchgangsbohrung (2) derart erstreckt, dass ein erster Bereich (7a) der Aussparung (7) diametral gegenüber von einem zweiten Bereich (7b) der Aussparung (7) in der Schieberbohrung (8) angeordnet ist, und
wobei in einer geöffneten Stellung des Scherschiebers (5a) der Schneidbereich (6a) in dem ersten Bereich (7a) oder in dem zweiten Bereich (7b) der Aussparung (7) untergebracht ist.

8. Verfahren zum Abscheren eines langgestreckten Elements, das in einer Durchgangsbohrung (2) einer Schieberventilvorrichtung (1) angeordnet ist und die Durchgangsbohrung (2) abdichtend verschließt, wobei die Durchgangsbohrung (2) für die Fluidkommunikation mit einem Bohrloch ausgebildet ist, und ferner dazu ausgebildet ist, ein langgestrecktes Element aufzunehmen, wobei die Schieberventilvorrichtung (1) ein Schieberelement (4) aufweist, das zwischen einer offenen und einer geschlossenen Stellung zum Öffnen oder Schließen der Durchgangsbohrung (2) beweglich angeordnet ist, wobei das langgestreckte Element in der Durchgangsbohrung (2) und einer Schieberbohrung (8) des Schieberelements (4) in einer geöffneten Stellung des Schieberelements (4) angeordnet ist, und wobei ein Scherschieber (5a) beweglich in dem Schieberelement (4) angeordnet ist, und zwar zwischen einer geöffneten Scherschieberstellung und einer geschlossenen Scherschieberstellung,
wobei das Verfahren ferner **dadurch gekennzeichnet ist,**
**dass** es die folgenden Schritte aufweist, die nacheinander ausgeführt werden:
- Bewegen des Scherschiebers (5a) in einer Aussparung (7) in dem Schieberelement (4), um dadurch einen Schneidbereich (6a) des Scherschiebers (5a) in eine geschlossene Scherschieberstellung zum Abscheren des langgestreckten Elements zu positionieren; und danach
- Bewegen des Schieberelements (4) mit dem Scherschieber (5a), der in der Aussparung (7) untergebracht ist, und dem Schneidbereich (6a) des Scherschiebers (5a), der die Schieberbohrung (8) einnimmt, in eine Schließstellung zum Verschließen der Durchgangsbohrung (2).

9. Verfahren nach Anspruch 8,
wobei das Abscheren durch ein Bewegen des Scherschiebers (5a) in der Aussparung (7) ausgeführt wird, so dass dadurch der Schneidbereich (6a) des Scherschiebers (5a) aus der Aussparung (7) heraus und in die Schieberbohrung (8) hinein vorsteht, und anschließendes Bewegen von dem Scherschieber (5a) relativ zu dem Schieberelement (4), bis das Abscheren des langgestreckten Elements vollendet ist und der Scherschieber (5a) sich in der geschlossenen Stellung befindet.

10. Verfahren nach Anspruch 9,
wobei der Scherschieber (5a) und das Schieberelement (4) in die gleiche Richtung bewegt werden.

11. Verfahren nach Anspruch 8,
wobei der Scherschieber (5a) und das Schieberelement (4) in entgegengesetzte Richtungen bewegt werden.

## Revendications

1. Ensemble robinet-vanne (1) destiné au cisaillement d'un organe allongé et à la régulation d'un écoulement de fluide à travers un alésage traversant (2) de l'ensemble robinet-vanne (1), l'alésage traversant (2) étant adapté pour une communication fluidique avec un trou de forage et étant configuré pour recevoir l'organe allongé, l'ensemble robinet-vanne (1) comprenant :
un élément de vanne (4) agencé mobile transversalement à l'alésage traversant (2) entre une position ouverte dans laquelle un alésage de vanne (8) de l'élément de vanne (4) communique avec l'alésage traversant (2) et une position fermée dans laquelle l'alésage traversant (2) de l'ensemble robinet-vanne (1) est fermé ; **caractérisé par**
une vanne de cisaillement (5a) agencée dans un évidement (7) dans l'élément de vanne (4), l'évidement (7) ayant une ouverture dans l'alésage de vanne (8) et étant orienté transversalement à l'alésage traversant (2), et la vanne de cisaillement (5a) étant agencée mobile dans l'évidement (7) entre une position ouverte de vanne de cisaillement dans laquelle l'alésage de vanne (8) est ouvert et une position fermée de vanne de cisaillement dans laquelle une portion de découpe (6a) de la vanne de cisaillement (5a) occupe l'alésage de vanne (8).

2. Ensemble robinet-vanne (1) selon la revendication 1, dans lequel l'élément de vanne (4) est agencé pour un déplacement dans la position fermée à condition que la vanne de cisaillement soit agencée dans la position fermée.

3. Ensemble robinet-vanne (1) selon la revendication 1 ou 2, dans lequel la portion de découpe (6a) de la vanne de cisaillement (5a) est pourvue d'au moins un trou (10) permettant une communication fluidique à travers la portion de découpe (6a).

4. Ensemble robinet-vanne (1) selon l'une des revendications précédentes, dans lequel le mouvement de la vanne de cisaillement (5a) et celui de l'élément de vanne (4) sont agencés dans la même direction.

5. Ensemble robinet-vanne (1) selon l'une des revendications 1 à 3, dans lequel le mouvement de la vanne de cisaillement (5a) et celui de l'élément de vanne (4) sont agencés dans des directions opposées.

6. Ensemble robinet-vanne (1) selon l'une des revendications précédentes, dans lequel au moins un actionneur (19, 21 ; 20, 15) est agencé pour guider le mouvement de la vanne de cisaillement (5a) et de l'élément de vanne (4).

7. Ensemble robinet-vanne (1) selon l'une des revendications précédentes, dans lequel l'évidement (7) s'étend transversalement à l'alésage traversant (2), de sorte qu'une première portion (7a) de l'évidement (7) soit agencée diamétralement opposée à une seconde portion (7b) de l'évidement (7) dans l'alésage de vanne (8), et dans lequel, dans une position ouverte de la vanne de cisaillement (5a), la portion de découpe (6a) est logée dans la première portion (7a) ou la seconde portion (7b) de l'évidement (7).

8. Procédé destiné au cisaillement d'un organe allongé agencé dans un alésage traversant (2) d'un ensemble robinet-vanne (1) et à la fermeture du trou traversant (2) de façon hermétique, dans lequel l'alésage traversant (2) est adapté pour une communication fluidique avec un trou de forage et est configuré pour recevoir un organe allongé, dans lequel l'ensemble robinet-vanne (1) comprend un élément de vanne (4) agencé mobile entre une position ouverte et une position fermée permettant d'ouvrir et de fermer l'alésage traversant (2), dans lequel l'organe allongé est agencé dans l'alésage traversant (2) et un alésage de vanne (8) de l'élément de vanne (4) dans une position ouverte de l'élément de vanne (4), et dans lequel une vanne de cisaillement (5a) est agencée mobile dans l'élément de vanne (4) entre une position ouverte de vanne de cisaillement et une position fermée de vanne de cisaillement, le procédé étant **caractérisé en ce qu'**il comprend les étapes suivantes réalisées séquentiellement :
le déplacement de la vanne de cisaillement (5a) dans un évidement (7) de l'élément de vanne (4) pour positionner ainsi une portion de découpe (6a) de la vanne de cisaillement (5a) dans une position de fermeture de vanne de cisaillement permettant de cisailler l'organe allongé ; et par la suite
le déplacement de l'élément de vanne (4) avec la vanne de cisaillement (5a) logée dans l'évidement (7) et la portion de découpe (6a) de la vanne de cisaillement (5a) occupant l'alésage de vanne (8) dans une position de fermeture permettant de fermer l'alésage traversant (2).

9. Procédé selon la revendication 8, dans lequel le cisaillement est mené par le déplacement de la vanne de cisaillement (5a) dans l'évidement (7), pour faire ainsi saillie de la portion de découpe (6a) de la vanne de cisaillement (5a) hors de l'évidement (7) et dans l'alésage de vanne (8) puis en poursuivant le déplacement de la vanne de cisaillement (5a) par rapport à l'élément de vanne (4), jusqu'à ce que le cisaillement de l'organe allongé soit achevé et que la vanne de cisaillement (5a) soit dans la position fermée.

10. Procédé selon la revendication 9, dans lequel la vanne de cisaillement (5a) et l'élément de vanne (4) opèrent un mouvement dans la même direction.

11. Procédé selon la revendication 8, dans lequel la vanne de cisaillement (5a) et l'élément de vanne (4) opèrent un mouvement dans la direction opposée.
